# EUROPEAN PATENT APPLICATION

(11) **EP 0 895 432 A1**
(43) Date of publication of application: **03.02.1999**
(21) Application number: 97305684.9
(22) Date of filing: 29.07.1997
(51) Int. Cl.: H04Q 7/22, H04M 3/38

(54) **Mobile telephone call screening**

(71) Applicant: Tecnomen OY, 02271 Espoo (FI)
(72) Inventor: Ward, Colm M., Ballinacurra, Limerick (IE)
(74) Representative: Hector, Annabel Mary

(57) **Abstract**

Terminating call screening for mobile telephones is provided by forwarding calls unconditionally to a node in the network which carries out the screening. Successfully screened calls are then forwarded to the mobile phone by obtaining location dependent information as if for a GSM short message, which is unaffected by the unconditional call forwarding.

## Description

This invention relates to call screening in a cellular mobile telephone network.

Terminating call screening (TCS) is a service which may be supplied to the user of a telephone, either mobile or fixed. With this service, only some particular incoming calls are allowed to terminate at the telephone, depending on criteria under the control of the telephone user. Typical examples of such criteria might be: (a) only calls from certain calling party identities (calling numbers), which are listed by the user; (b) only calls from calling parties supplying the correct password, known as a screening password, which is given to chosen people by the user; (c) only calls at particular times of the day, or days of the week, etc..

The user may also choose how to handle an incoming call which does not meet the screening criteria. Typical examples of the way in which such calls might be handled are: (a) the call is routed to a call answering system; (b) the call is routed to a pager; (c) the call is routed to an operator.

It is known to provide a TCS service in a mobile cellular telephone system, such as one based on Global System for Mobile Communication (GSM) architecture. One method of doing so involves the user or mobile subscriber keeping the number of the telephone secret, and publishing another "public" number for use by callers. Calls to the public number are routed to equipment for implementing the screening, in a manner well known in the art, which equipment can then forward successful calls to the secret number.

This method suffers from a number of disadvantages. In the existing network, mobile telephone numbers are already widely known, such that new secret numbers would be required to be associated with existing mobile telephones. Furthermore, these secret numbers may become known over time, causing loss of the control over incoming calls offered by TCS, and rendering the method useless.

A further method of providing TCS in a mobile system is to provide equipment for performing the screening in the telephone terminal itself. With this method, the terminal contains a screening list or other screening criteria and checks the incoming caller identity or other information against the screening criteria. The user may be given an option to accept screened unsuccessful calls. Unscreened or unaccepted calls could be handled according to the chosen direct method, or simply not answered.

A major problem with this method is that the calling line identity might not be provided by the network to the terminal, depending upon the calling line identity restriction or presentation service supplied on the network. Furthermore, proper handling of unsuccessfully screened calls and implementation of the password to bypass the screening list would be difficult.

It might be possible to implement the TCS service using the existing GSM infrastructure. For example, a screening list could be maintained in the "Home Location Register" (HLR) to which each mobile telephone is allocated, and used by the "Mobile Switching Centres" (MSCs) which handle calls for telephones in their area, and "Visiting Location Registers" (VLRs) which provide data concerning telephones active in their area. However, this would involve extensive design changes to the infrastructure and the communications protocols. Therefore this would be impractical other than through the international standardisation bodies, with the associated implications in terms of time and cost.

According to the present invention, there is provided a method of providing terminating call screening for a mobile telephone comprising forwarding all calls to the telephone to a predetermined node in the telephone network, comparing at that node information concerning the call with predetermined screening criteria, and forwarding the call to the telephone in the event that the call meets the screening criteria.

Conveniently, the calls are forwarded to the node for screening by forwarding the calls to another telephone number; so called unconditional call forwarding (CFU). In order to forward a call which meets the screening criteria from the node to the telephone, it is necessary to bypass the original forwarding of all calls to the node for screening. Preferably, a successful screened call is forwarded to the telephone by obtaining location dependent information about the telephone. Such information may be obtained by requesting routing information for sending a short message (SM). The GSM short message function is not affected by the unconditional call forwarding.

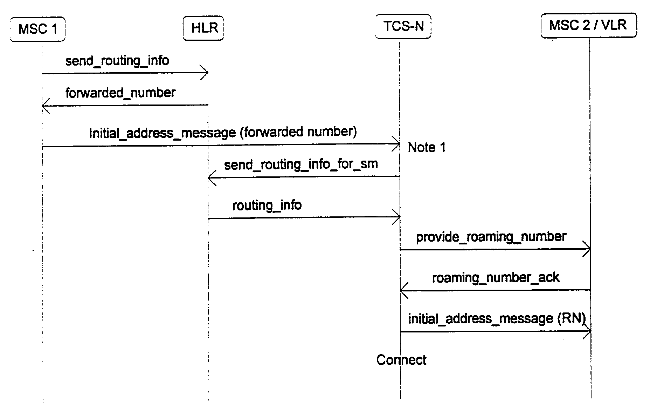

The invention will now be described with reference to the single figure, which is a diagram showing the method steps according to one embodiment of the invention.

The GSM infrastructure comprises a number of MSCs, which are used to handle calls to Mobile Subscribers (MSs) in the area which they each cover. A call from a fixed network subscriber to an MS is routed via a gateway MSC (GMSC). An incoming call for the MS is received by the GMSC. Each MS has an HLR, and the GMSC requests routing information from the HLR for the MS.

Location information is provided to the HLR by the VLRs. When the mobile telephone is switched on, it is logged onto the nearest VLR, and the subscriber data for the subscriber is requested from the HLR for that MS. The HLR always stores the address of the VLR where the subscriber was last active. Normally, the HLR provides this information as routing information to the GMSC in order to place the call. The GMSC then contacts the VLR to get a "roaming number" which can be used to route the incoming call to the MSC handling the area where the MS is located. The GMSC then places the call to the roaming number, which causes the call to be routed to the correct MSC.

It is known to provide unconditional call forwarding (CFU), where the HLR supplies a "forwarded to" number to the GMSC which is the number of a predetermined node in the network. This process of forwarding calls to another node is known for example for the purpose of implementing voice messaging in the Public Land Mobile Network (PLMN). According to the invention, and as shown in the figure, if the MS subscribes to the TCS service, the HLR sends a "forwarded to" number, in the same way as in CFU, which corresponds to a special node in the network which is the terminating call screening node (TCS-N). The GMSC then places the call to the "forwarded to" number. A voice messaging node could also implement the TCS service in accordance with the invention as the TCS-N.

The TCS-N receives the incoming call, and implements the screening process in a known manner. If the call is successfully screened, so that it is to be connected to the MS, then the TCS-N must bypass the call forwarding at the HLR.

This is achieved by the TCS-N asking the HLR for routing information for sending a GSM short message (SM) to the MS. An SM is a one-way message comprising a number of characters which can be displayed on the MS. This function is unaffected by the CFU, and the routing information for the MS is therefore returned to the TCS-N. This routing information is the address of the Mobile Switching Centre (MSC) to which SMs for the MS should be routed.

However, in order to place the call to the MS, a "roaming number" must be obtained from the visiting location register (VLR) which is associated with the MSC. The VLRs and MSCs are in practise co-located, and can be addressed as one entity, although they have separate addresses for message routing. The TCS-N therefore requests the roaming number from the MSC/VLR using the address obtained from the HLR. The VLR replies with the roaming number for the MS, which is used by the TCS-N to place a call to the MS. Thereby, the initial incoming call and the outgoing call from the TCS-N are interconnected, and the MS can communicate with the calling party.

In some cases, an MS user also requires conditional forwarding (CCF), for example to a voice messaging system, for example when there is no answer from the MS, or when it is not reachable or busy. Typically, such a call will be forwarded to the same node where screening takes place. A looped call situation could arise if the node carries out the screening and forwarding once again. Usually in GSM, CFU suppresses CCF, so that when a user has TCS, CCF will not be implemented. Thus when the unconditional forwarding associated with TCS is not active to the TCS-N, calls should not be screened and forwarded. The node can therefore interrogate the HLR to check whether CFU is active to the TCS-N before forwarding screened calls.

## Claims

1. A method of providing terminating call screening in a GSM network for a mobile telephone, comprising forwarding all calls to the telephone to a predetermined node in the network, comparing at that node information concerning the call with predetermined screening criteria, and forwarding the call to the telephone in the event that the call meets the screening criteria.

2. A method as claimed in claim 1, in which the calls are forwarded to the predetermined node for screening by forwarding the calls to another telephone number.

3. A method as claimed in claim 1 or 2, in which a successful screened call is forwarded to the telephone by obtaining location dependent information about the telephone.

4. A method as claimed in claim 3, in which the location dependent information is obtained by requesting routing information for sending a short message.

5. A method as claimed in claim 4, in which a roaming number is obtained from a visiting location register by using the address of the associated mobile switching centre provided in response to the request for routing information for sending a short message.

6. A method as claimed in any one of the preceding claims, comprising determining whether a call has been conditionally or unconditionally forwarded to the node, and carrying out the comparing and forwarding steps only for calls which have been unconditionally forwarded.
